# EUROPEAN PATENT APPLICATION

(11) **EP 3 130 707 A1**
(43) Date of publication of application: **15.02.2017**
(21) Application number: 15180713.8
(22) Date of filing: 12.08.2015
(51) Int. Cl.: E02F 7/04, B01D 21/00, B01D 21/24, E02F 7/06

(54) **GUIDE BLADE FOR AN OVERFLOW STRUCTURE TO BE PLACED ON A VESSEL**

(71) Applicant: Danmarks Tekniske Universitet, 2800 Kgs. Lyngby (DK)
(72) Inventor: JENSEN, Jacob Hjelmager, DK-3400 Hillerød (DK)
(74) Representative: Zacco Denmark A/S

(57) **Abstract**

The invention relates to a guide blade (1) for an overflow structure (100) to be placed on a vessel, the guide blade comprising a primary contact surface (4) for guiding a stream of a water mixture into an overflow structure and a secondary contact surface (5) being a backside of the primary contact surface (4), the primary contact surface having an edge (2) configured for abutting an overflow structure (100) and at least one free edge, wherein the guide blade is configured for being attachable to a unit to be arrange on or in an inlet (109) of an overflow structure or directly on or in an inlet (109) of an overflow structure by means of one or more fastening elements or by welding. The invention further relates to an overflow system comprising one or more guide blades and an overflow structure. The invention further relates to a method of guiding a stream of a watery mixture approaching and/or entering an overflow structure by means of one or more guide blades.

## Description

### FIELD OF THE INVENTION

The invention relates to a guide blade for an overflow structure to be placed on a vessel. The invention further relates to an overflow system comprising one or more guide blades and an overflow structure. The invention further relates to a method of guiding a stream of a watery mixture approaching and/or entering an overflow structure by means of one or more guide blades.

### BACKGROUND OF THE INVENTION

The invention is applicable in the industry of dredging. Dredging is the action of removing sediment from the seabed, transporting it and disposing in the destined location. For the ships called dredgers it is not feasible to travel with the excess water, which is an additional load and they therefore want to continuously discharge it. The discharge is mainly done through an overflow structure.

One disadvantage of the current overflow structures consisting of a pipe and optionally a funnel is that, when water is discharged through the overflow structure, fine sediments that did not settle to the bottom of the dredger, combine with the exceed water creating a watery mixture. The fine sediments discharged into the ambient waters with the exceed water then become the cause of large-scale sediment plumes.

Plumes are spread as a consequence of air being dragged through the overflow structure. Air is mixed into the watery mixture, when the flow plunges into the overflow structure, which creates foam (often described as a turbulent hydraulic jump) where the plunging water unites. Created plumes i.e. regions of increases turbidity of waters have a harmful impact on the lives of marine organisms. The increased turbidity means not only the decreased amount of light reaching the seabed but also sediment clogging gills of underwater organisms. The increased turbidity, which is normally considered as temporary impacts, can become chronic in the case of large dredging projects.

It is therefore desirable to reduce the dispersion of sediment plumes and as a consequence reduce the environmental impact, which would contribute to the increase of the production rates for the same environmental target.

### SUMMARY OF THE INVENTION

Disclosed herein is a guide blade for an overflow structure to be placed on a vessel, the guide blade comprising a primary contact surface for guiding a stream of a water mixture into an overflow structure and a secondary contact surface being a backside of the primary contact surface, the primary contact surface having an edge configured for abutting an overflow structure and at least one free edge, wherein the guide blade is configured for being attachable to a unit to be arrange on or in an inlet of an overflow structure or directly on or in an inlet of an overflow structure by means of one or more fastening elements or by welding.

The vessel may be used for dredging, i.e. a dredger collecting sediment from the seabed into a container arranged on the dredger and discharge exceed water collected with the sediment through an overflow structure arranged in the container. The vessel may alternatively be a barge a float or the like comprising an overflow structure, whereas the actually dredging is performed by another vessel loading the sediment onto the barge or float or the like. The exceed water may be a water mixture comprising water and fine sediment, i.e. sediment which has not managed to settle at the bottom of the container.

The guide blade may be configured for being attached to the overflow structure together with one or more corresponding guide blades. The guide blades may be attached directly to the overflow structure one by one. Alternatively the guide blades may be attached to a unit configured for being arranged or attached to the overflow structure. The unit may be a skeleton, a rigid supportive structure, a structural frame or the like.

The overflow structure may comprise a cylindrical part with a longitudinal centre axis extending through the middle of the overflow structure. The cylindrical part my alternatively be replaced by a squared part, an oval part, a triangular part or any other polygonal shaped part. The cylindrical part may extend from and through the bottom of the vessel and up into the container arranged on the vessel. The overflow structure may further comprise a funnel part extending from an upper end or edge of the cylindrical part. An overflow structure comprising a funnel part may also be known as a hopper overflow structure. The upper edge of the cylindrical part may define a first entrance port and an upper edge of the funnel part may define a second entrance port. The overflow structure may thereby comprise at least a first entrance port or at least a first and a second entrance port. The uppermost edge of either the upper edge of the cylindrical part or the funnel part, i.e. the uppermost entrance port of the first or second entrance port, may not exceed the upper edge of the container the overflow structure is arranged or configure for being arranged in. The overflow structure may be the original overflow structure arranged on the vessel. The guide blade(s) may therefore either be attached to the overflow structure originally arranged on the vessel or the guide blade(s) may be arranged on an overflow structure configured to be arranged on a vessel. The diameter of the first and/or second entrance port may correspond to any conventional sizes of known types of overflow structures. Alternatively the overflow structure may comprise a cylindrical part and a flat cylindrical collar part extending from the upper edge of the cylindrical part and outward, i.e. away from the centre axis of the overflow structure, and perpendicular to the centre axis. Both the outer and inner edge of the collar part may be considered as defining the inlet of the overflow structure. The cylindrical part my alternatively be replaced by a squared part, an oval part, a triangular part or any other polygonal shaped part.

The free edge may be any edge which is not attached to the overflow structure or the unit to be arranged on an overflow structure.

The inlet of the overflow structure may be defined as the uppermost edge of either the upper edge of the cylindrical part or the funnel part, i.e. the uppermost entrance port of the first or second entrance port.

The guide blade(s) may have a length which is longer, approximately the same or less than the diameter of the inlet of the overflow structure the guide blade(s) is configured to be arranged or attached on or in.

The guide blade(s) may be configured for extending from the inlet of the overflow structure and away from the centre axis of the overflow structure and/or the guide blade may be configured for extending from the inlet of the overflow structure and towards the centre axis of the overflow structure.

The edge on the guide blade(s) configured for abutting an overflow structure may be configured for abutting an outside surface and/or an inside surface of either or both of the cylindrical part and/or the funnel part, preferably the uppermost part of the cylindrical part and the funnel part. The guide blade(s) may be configured for extending vertically from or along the edge. Guide blade(s) abutting the outside surface of the overflow structure may continue into the overflow structure and also abutting the inside surface of the overflow structure, whereas an inside part of the guide blade(s) may be formed as a spiral in a top view of the overflow structure.

The primary contact surface of each guide blade may be configured for rotating the stream into a rotating stream running through the overflow structure. The primary contact surface may be configured for at the same time leading the exceed water towards the inlet of the overflow structure.

The guide blade may then be used to rotate the flow of an overflow stream approaching and/or entering the overflow structure. A result of rotating the overflow stream may be that the watery mixture will cling to the inside surface of the overflow structure. Another result of rotating the overflow stream may be that the overflow stream may spiral together in a vortex. In both cases, an advantage over the non-rotated overflow is achieved.

In the case of the mixture clinging to the wall, the discharge stream will penetrate the free surface of the ambient water, i.e. at the bottom end of the overflow structure, which is associated with little generation of turbulence and thus air dragging. The air dragged down in this case is very limited and any air entrained will (again) be centrifuged.

In the case of the flow spiralling together, the overflow stream spins up smoothly at the bottom of the vortex causing limited trapping of air. In the case of non-rotated flows, a "hydraulic jump" is created which is associated with a lot of foam and trapping of air. The rotating flow creates a centrifugal force on the watery mixture. Whereas the heavy part of the watery mixture, e.g. sediments, is forced towards the inside surface of the overflow structure, the lighter part, i.e. the air, is forced towards the centre of the overflow structure. This separation of air and sediments allows the air to either escape to the atmosphere directly, or to be concentrated in the centre of the cylindrical part.This as concentrated air increases the sizes of air bubbles and thus its buoyancy. Likwise, sediment forced towards the primary contact surface of the blades, i.e. the surface facing the overflow structure, creates a high concentration of sediment and, for the case where blades are placed outside of the overflow, a precipitation of sediments along the blade may occur, i.e. sediments escape before reaching the overflow. It furthermore increases the collision probability of sediment particles and thus the fine sediment flocculation potential.

The guide blade(s) may be made from a metal or any other suitable material. The guide blade(s) may be made from steel.

In one or more embodiments an angle between the guide blade and an overflow structure is configured to be less than 90°, a vertex of the angle being in a contact point where the guide blade is configured for abutting an overflow structure, the contact point being placed along an inlet of an overflow structure.

The angle may be less than 90° in order to obtain a rotation of the stream. The angle may preferably be the angle in the contact point between the guide blade and the overflow structure.

In one or more embodiments the edge is configured for abutting an outside surface of an overflow structure and the angle is configured to be less than 90° between the primary contact surface and an overflow structure. The vertex of the angle may be in a contact point where the guide blade is configured for abutting the overflow structure, the contact point may be placed along the inlet of the overflow structure. The angle may preferably be the angle in the contact point between the primary contact surface and the overflow structure.

In one or more embodiments the edge is configured for abutting an inside surface of an overflow structure and the angle is configured to be less than 90° between the secondary contact surface and an overflow structure. The vertex of the angle may be in a contact point where the guide blade is configured for abutting the overflow structure, the contact point may be placed along the inlet of the overflow structure. The angle may preferably be the angle in the contact point between the secondary contact surface and the overflow structure.

In one or more embodiments the one or more fastening element comprises one or more welding surfaces.

The one or more welding surfaces may be configured for welding the guide blade to an outside or inside surface of the overflow structure. Alternatively the welding surfaces may be configured for welding the guide blade to a unit to be arranged on the overflow structure.

In one or more embodiments the one or more fastening elements comprises a rail or track element configured to be slidably, and preferably releasably, attached in a corresponding fastening element comprising a track or rail element in or on an overflow structure.

The corresponding fastening element may be arranged on or in the outside or inside surface of the overflow structure.

The one or more fastening element may comprise a rail being slidably attached in the corresponding fastening element comprising a track in or on the surface of the overflow structure. Or the one or more fastening element may comprise a track being slidably attached in the corresponding fastening element comprising a rail on a surface of the overflow structure.

In one or more embodiments the one or more fastening elements is configured for being releasably attached to an overflow structure by means of bolts and/or screws.

The fastening element comprising a rail or track and/or is configured for being attached to the overflow structure by means of bolts and/or screws may preferably be releasably attached to the corresponding fastening element, so that the guide blade(s) may be disengaged and replaced by another type of guide blade(s) with e.g. different dimensions, a different profile, and/or configured to be arranged with a different angle. The change of one type of guide blade(s) to another type of guide blade(s) may be done between tasks requiring different flow rates through the overflow structure.

In one or more embodiments the guide blade is curved in an approximately horizontal direction.

Using one or more horizontal curved guide blades may enhance the effectiveness of the guide blade(s) obtaining a better rotation of the stream approaching or entering the overflow structure, i.e. the overflowing stream.

In one or more embodiments the guide blade is curved in an approximately vertical direction.

Using one or more vertically curved guide blades may enhance the effectiveness of the guide blade(s) obtaining a better rotation of the stream approaching or entering the overflow structure, i.e. the overflowing stream.

The upper part of the vertically curved guide blade may be approximately straight, i.e. vertical, so that the vertically curved guide blade starts curving from where the guide blade adjoins the upper of the first or second entrance port and down.

If the guide blade is vertically curved it may be possible to obtain a rotation of the stream even though the angle between the guide blade and the overflow structure is configured to be 90°.

The guide blade may be curved in both an approximately horizontal direction and in an approximately vertical direction.

In one or more embodiments an upper part of the guide blade is configured to extend from an inlet of an overflow structure and above the inlet.

The inlet may be defined by the uppermost of the first and second entrance port. If the overflow comprises a cylindrical part, the inlet may be defined by the upper edge of the cylindrical part. If the overflow structure comprises a cylindrical part and a funnel part, the inlet may be defined by the upper edge of the funnel part.

The upper part of the guide blade(s) may be configured to extend above the water-level in the container in which the overflow structure is arranged.

In one or more embodiments the guide blade further comprises a fluid straightening part extending from the inside surface of the overflow structure towards the centre axis of the overflow structure.

The fluid straightening part may preferably extend from the inside surface of the cylindrical part of the overflow structure. The guide blade and the fluid straightening part may be two interconnected parts, i.e. one part, or two separate parts attached to the overflow structure separately.

The fluid straightening part may be configured to straighten the rotated flow so that a stream flowing approximately parallel to the centre axis is released from the overflow structure, i.e. the discharge stream may be released to the ambient water having a flow direction parallel to the centre axis of the overflow structure.

The fluid straightening part may be configured to straighten the rotated flow, i.e. dampen or eliminating the rotation of the stream, so that an approximately vertical stream is released from the overflow structure, i.e. the discharge stream may be released to the ambient water having an approximately vertical flow direction.

Further disclosed herein is an overflow system comprising an overflow structure for guiding a stream of a water mixture, wherein the system comprises at least one guide blade as described above.

In one or more embodiments the system comprises at least two guide blades and the overflow structure comprises at least a first entrance port or at least a first and a second entrance port, the guide blades is evenly distributed along said first and/or second entrance port.

If the overflow system comprises two guide blades the guide blades may be distributed so that the guide blades divide the first and/or second entrance port into two equal sized portions. If the overflow system comprises three guide blades the guide blades may be distributed so that guide blades divide the first and/or second entrance port into three equal sized portions. And so forth.

Further disclosed herein is a method of guiding a stream of a water mixture approaching and/or entering an overflow structure by means of one or more guide blades as described above, the method comprising; rotating the flow of the stream as the stream approach and/or enters the overflow structure.

In one or more embodiments the method further comprises the step of straightening the flow of the rotated stream into a stream flowing approximately parallel to a centre axis of the overflow structure.

The discharge stream may be released to the ambient water as an approximately vertical flow.

Reducing or eliminating the rotation of the rotated stream inside the overflow structure may be an advantage as the sediment clinging to the inside surface of the overflow structure do not centrifuge when entering the ambient water with the discharge stream. Instead of spreading the fine sediment into the ambient water the sediment may instead sink towards the seabed.

### BRIEF DESCRIPTION OF THE DRAWINGS

Different embodiments of the invention will now be described, by way of examples only, with reference to the accompanying drawings, as follows;
Fig. 1 schematically shows an overflow structure arranged on a vessel according to prior art;
Fig. 2 schematically shows a perspective view of a plurality of guide blades according to the invention attached to an outside surface of an overflow structure;
Fig. 3 schematically shows a top view of a plurality of guide blades according to the invention attached to an outside surface of an overflow structure as well as a fastening element according to the invention for attaching a guide blade to an overflow structure;
Fig. 4A, 4B and 4C schematically show a top view and a perspective view of different arrangements of a plurality of guide blades according to the invention attached to an inside surface of an overflow structure;
Fig. 5 schematically shows a top view and a perspective view of a further different arrangement of a plurality of guide blades according to the invention attached to an upper surface of a flat circular collar part of an overflow structure, and
Fig. 6 schematically shows a top view and a perspective view of a further different arrangement of a plurality of guide blades according to the invention attached to an outside surface of a cylindrical part of an overflow structure.

### DESCRIPTION OF PREFERED EMBODIMENTS

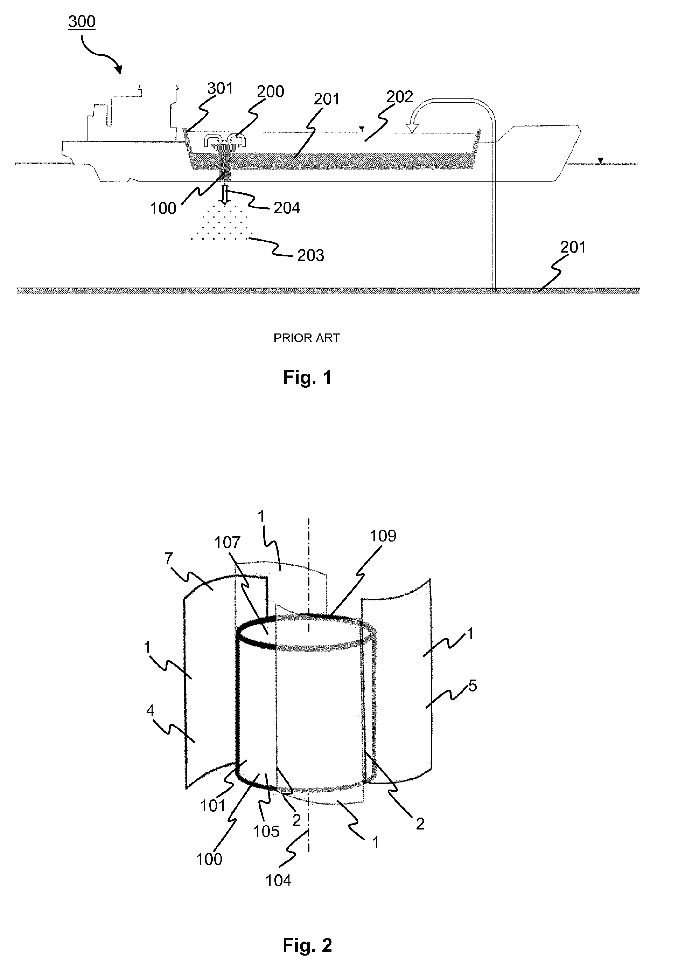

Fig. 1 schematically shows an overflow structure 100 arranged on a vessel 300 according to prior art. When dredging, the vessel collects sediment 201 from the seabed into a container 301. As most of the sediment settles in the bottom of the container fine sediments that does not settle and which still is mixed in the excess water is discharged through the overflow structure with the stream 200 and the discharge stream 204 of the excess water creating sediment plumes 203 in the ambient water.

The stream 200 and the discharge stream 204 may together constitute an overflow stream.

Fig. 2 schematically shows a plurality of guide blades 1 according to the invention attached to an outside surface 101 of an overflow structure 100. The overflow structure comprises a cylindrical part 105 with a longitudinal centre axis 104 through the middle of the overflow structure. In the presently illustrated embodiment, the centre axis is approximately vertical. An upper end or edge of the cylindrical part defines a first entrance port 107 of the overflow structure as well as the inlet 109 of the overflow structure.

The guide blades 1 comprises a primary contact surface 4 facing the outside surface 101 of the overflow structure 100 and a secondary contact surface 5 opposite the primary contact surface turning away from the overflow structure. The guide blades further comprises an aligning edge 2 aligning the guide blade with the outside surface of the overflow structure.

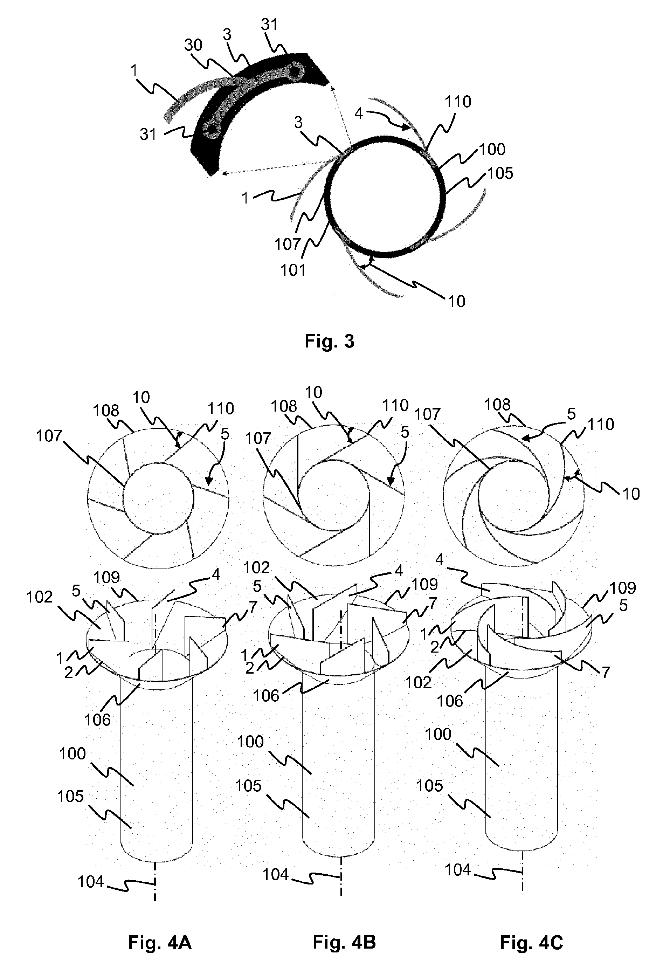

In the top view of the illustrated embodiment, see Fig. 3, an angle 10 in a contact point 110 between each of the guide blades 1 primary contact surfaces 4 and the first entrance port 107 is less than 90°, i.e. at the inlet of the overflow structure.

In the presently illustrated embodiment the guide blade 1 is horizontally curved from the aligning edge 2 towards the overflow structure 100. Furthermore an upper part 7 of the guide blade extends above the first entrance port 107, whereas the first entrance port defines the inlet 109 of the overflow structure.

Fig. 3 schematically shows the plurality of guide blades 1 attached to the outside surface 101 of the overflow structure shown in Fig. 2 as well as a fastening element 3 according to the invention for attaching the guide blade 1 to the overflow structure 100.

In the presently illustrated embodiment the fastening element 3 is shown in combination with an overflow structure 100 comprising a cylindrical part 105 and used for attaching the guide blade 1 to the outside surface 105 of the overflow structure. But it may be obvious for the person skilled in the art, that the fastening element may as well be used in combination with an overflowing structure comprising a cylindrical part and a funnel part extending from the cylindrical part and upward as well as for attaching the guide blades to the inside surface of the overflow structure and any combination thereof.

The fastening element 3 comprises a track 30 cut into the outside surface 101 of the overflow structure 100 wherein the guide blade 1 may be slidably attached. Optionally the guide blade may also be secured by bolt or screws 31 when attached in the track.

Fig. 4A, 4B and 4C schematically show different arrangements of a plurality of guide blades 1 according to the invention attached to an inside surface 102 of an overflow structure 100. The overflow structure comprises the cylindrical part 105 and a funnel part 106 extending from an upper end of the cylindrical part and upward and has the longitudinal centre axis 104 going through the middle of the overflow structure. The upper end or edge of the cylindrical part defines the first entrance port 107 and an upper end or edge of the funnel part defines a second entrance port 108 of the overflow structure.

The guide blades 1 comprises the primary contact surface 4 and the secondary contact surface 5, wherein the primary contact surface in a top view of each illustrated embodiment face the first entrance port 107 of the cylindrical part 105 of the overflow structure 100. The secondary contact surface 5 is the opposite side of the guide blade than the primary contact surface and turns away from the cylindrical part. The guide blades further comprises the aligning edge 2 aligning the guide blade with the inside surface 102 of the overflow structure.

In the top view of all the three illustrated embodiments the angle 10 in the contact point 110 between the secondary contact surface 5 of each of the guide blades 1 and the second entrance port 108 is less than 90°. Furthermore the upper part 7 of the guide blades extends above the second entrance port 108, whereas the second entrance port is the uppermost entrance port of the first and second entrance port and therefore defines the inlet 109 of the overflow structure.

In Fig. 4A and 4B the guide blade 1 extends vertically from the inside surface 102 of the overflow structure 100 and the guide blade is approximately straight in a horizontal direction. In Fig. 4C the guide blade 1 is horizontally curved along the abutting edge 2.

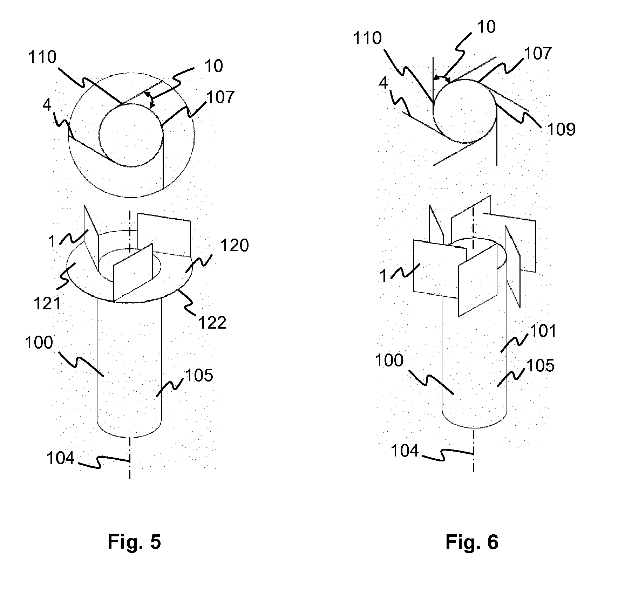

Fig. 5 schematically shows a further different arrangement of a plurality of guide blades 1 according to the invention attached to an upper surface 121 of a flat circular collar part 120 of an overflow structure 100. The upper surface may be considered as the inside surface of the overflow structure. The guide blades are in the presently illustrated embodiment flat guide blades extending approximately parallel with the centre axis 104 of the overflow structure.

The flat circular collar part 120 extends from the upper edge or end of the cylindrical part 105 and outward, i.e. away from the centre axis 104.

In the top view of the illustrated embodiment the angle 10 in the contact point 110 between the primary contact surface 4 of each of the guide blades 1 and the first entrance port 107 is less than 90°. Furthermore the guide blades extend from the level of the first entrance port and upward parallel with the centre axis 104. Both an outer edge 122 of the collar part 120 and the first entrance port may define the inlet of the overflow structure.

Fig. 6 schematically shows a further different arrangement of a plurality of guide blades 1 according to the invention attached to the outside surface 101 of the cylindrical part 105 of the overflow structure 100. The guide blades are in the presently illustrated embodiment flat guide blades extending approximately parallel with the centre axis 104 of the overflow structure.

The upper end or edge of the cylindrical part 105 defines the first entrance port 107 of the overflow structure as well as the inlet 109 of the overflow structure. The guide blades 1 comprise the primary contact surface 4 facing the outside surface 101 of the overflow structure 100.

In the top view of the illustrated embodiment, an angle 10 in a contact point 110 between each of the guide blades 1 primary contact surfaces 4 and the first entrance port 107 is less than 90°, i.e. at the inlet of the overflow structure.

## Claims

1. A guide blade (1) for an overflow structure (100) to be placed on a vessel, the guide blade comprising a primary contact surface (4) for guiding a stream of a water mixture into an overflow structure and a secondary contact surface (5) being a backside of the primary contact surface (4), the primary contact surface (4) having an edge (2) configured for abutting an overflow structure (100) and at least one free edge, wherein the guide blade (1) is configured for being attachable to a unit to be arrange on or in an inlet (109) of an overflow structure (100) or directly on or in an inlet (109) of an overflow structure (100) by means of one or more fastening elements (3) or by welding.

2. A guide blade according to claim 1, **characterized in that** an angle (10) between the guide blade (1) and an overflow structure (100) is configured to be less than 90°, a vertex of the angle (10) being in a contact point (110) where the guide blade (1) is configured for abutting an overflow structure (100), the contact point (110) being placed along an inlet (109) of an overflow structure (100).

3. A guide blade according to claim 1 or 2, **characterized in that** the edge (2) is configured for abutting an outside surface (101) of an overflow structure (100) and that the angle (10) is configured to be less than 90° between the primary contact surface (4) and an overflow structure (100).

4. A guide blade according to claim 1 or 2, **characterized in that** the edge (2) is configured for abutting an inside surface (102) of an overflow structure (100) and that the angle (10) is configured to be less than 90° between the secondary contact surface (5) and an overflow structure (100).

5. A guide blade according to one or more of the preceding claims, **characterized in that** the one or more fastening elements (3) comprises one or more welding surfaces.

6. A guide blade according to one or more of the preceding claims, **characterized in that** the one or more fastening elements (3) comprises a rail or track (30) element configured to be slidably, and preferably releasably, attached in a corresponding fastening element comprising a track or rail element in or on an overflow structure (100).

7. A guide blade according to one or more of the preceding claims, **characterized in that** the one or more fastening elements (3) is configured for being releasably attached to an overflow structure (100) by means of bolts and/or screws (31).

8. A guide blade according to one or more of the preceding claims, **characterized in that** the guide blade (1) is a curved in an approximately horizontal direction.

9. A guide blade according to one or more of the preceding claims, **characterized in that** the guide blade (1) is curved in an approximately vertical direction.

10. A guide blade according to one or more of the preceding claims, **characterized in that** an upper part (7) of the guide blade (1) is configured to extend from an inlet (109) of an overflow structure (100) and above the inlet (109).

11. A guide blade according to one or more of the preceding claims, **characterized in that** the guide blade (1) further comprises a fluid straightening part (6) configured for extending from an inside surface (102) of an overflow structure (100) towards a centre axis (104) of the overflow structure (100).

12. An overflow system comprising an overflow structure (100) for guiding a stream of a water mixture, **characterized in that** the system comprises at least one guide blade (1) according to one or more of claims 1 to 11.

13. A system according to claim 12, the system comprising at least two guide blades (1) and the overflow structure (100) comprising at least a first entrance port (107) or at least a first and a second entrance port (107, 108), **characterized in that** the guide blades (1) is evenly distributed along said first and/or second entrance port (107, 108).

14. A method of guiding a stream (200) of a water mixture approaching and/or entering an overflow structure (100) by means of one or more guide blades (1) according to any one of claims 1 to 11, the method comprising;
- rotating the flow of the stream (200) as the stream (200) approach and/or enters an overflow structure (100).

15. A method according to claim 14, the method further comprising the step of straightening the flow of the rotated stream into a stream flowing approximately parallel to a centre axis (104) of the overflow structure (100).
